# DEMANDE DE BREVET EUROPEEN

(11) **EP 1 203 554 A1**
(43) Date de publication de la demande: **08.05.2002**
(21) Numéro de dépôt: 00203855.2
(22) Date de dépôt: 03.11.2000
(51) Int. Cl.: A47J 31/40

(54) **Dispositif pour l'extraction d'une substance alimentaire contenue dans un élément de recharge**

(71) Demandeur: SOCIETE DES PRODUITS NESTLE S.A., 1800 Vevey (CH)
(72) Inventeur: Jarisch, Christian, 1260 Nyon (CH); Kollep, Alexandre, 1095 Lutry (CH)
(74) Mandataire: Borne, Patrice Daniel

(57) **Abrégé**

L'invention se rapporte à un dispositif pour l'extraction (1) d'une substance alimentaire contenue dans un élément de recharge (5) fermé, ledit dispositif comprenant un corps creux (2) muni d'un logement pour recevoir l'élément de recharge, un canal d'arrivée d'eau traversant ledit corps et communiquant dans le logement, une pluralité d'éléments de perçage (6) disposés dans le logement pour percer l'élément de recharge en plusieurs endroits distincts afin de permettre le passage de l'eau dans l'élément de recharge, caractérisé en ce que les éléments de perçage (6) sont espacés dans le logement par rapport à la direction d'arrivée d'eau dans le logement et en ce que, chaque élément de perçage comprend (i) une portion de base (65) solidaire du corps faisant saillie dans le logement; ladite portion de base étant destinée à s'engager au moins partiellement à l'intérieur de l'élément de recharge et (ii) une surface de découpe (66) qui intersecte la portion de base selon un angle aigu.

## Description

L'invention concerne un dispositif d'extraction de substance alimentaire pour la confection de boissons utilisant un élément de recharge fermé chargé en substance alimentaire et traversée par un flux d'eau sous pression.

L'utilisation de doses prédéterminées et préemballées sous forme d'éléments de recharge contenant du café moulu pour la préparation de boissons du type expresso ou similaire présente de nombreux avantages, entre autres, ceux de faciliter les opérations de préparation de la boisson, d'assurer une préparation relativement propre et de contrôler un dosage et une qualité relativement constante du produit préparé.

Le principe d'extraction d'éléments de recharge fermés ou scellés consiste à : (i) enfermer l'élément de recharge dans une enceinte close, (ii) percer une face de l'élément, (iii) introduire une quantité d'eau chaude dans l'élément de façon à créer un environnement sous pression à l'intérieur de l'élément pour produire l'extrait de café (iv) puis libérer l'extrait de café au travers de la face opposée de l'élément de recharge qui au contact de parties saillantes du dispositif s'ouvre sous l'effet de la pression interne.

Il existe déjà des dispositifs d'extraction de capsules ou de cartouches, comprenant un logement pour la cartouche à extraire et une pointe comme ceux décrits dans les brevets CH 605 293 et EP 242 556. Dans ces dispositifs, la pointe a une double fonctionnalité. D'une part, elle réalise l'ouverture de la partie supérieure de la capsule et d'autre part, elle constitue le canal d'arrivée d'eau en ce sens que l'eau est directement introduite à l'intérieure de la capsule par la pointe elle-même. Un inconvénient d'un tel dispositif provient de ce que le trou obtenu par une aiguille unique a pour effet de créer, au début de l'extraction, un chemin préférentiel au travers de la masse de café à extraire sans la mouiller entièrement. La conséquence de la création d'un chemin privilégié est que lorsque l'extraction se poursuit, la vitesse de montée en pression devient trop rapide ce qui peut conduire à la libération de l'extrait trop tôt de sorte que l'on n'atteint pas un temps d'extraction suffisant. Bien entendu, la conséquence peut être une perte des solides et arômes qui restent alors fixés dans le marc et ne sont donc pas transférés dans l'extrait. Un autre inconvénient provient de ce que la pointe a tendance à s'obstruer rapidement en raison du calcaire de l'eau ou du contact avec le marc ; ce qui peut affecter les performances du dispositif. Compte tenu de la taille importante du trou pratiqué dans la capsule, la capsule est aussi sujette à des remontées indésirables de marc et de résidus liquides après usage.

Le document EP 0 604 615 B1 se rapporte, en autre à un dispositif qui comprend des moyens de perforation d'un sachet souple contenant le produit à extraire qui se présente sous la forme d'une grille de répartition d'eau pourvue sur sa face inférieure d'éléments de pointes, lames ou croix saillantes. Des orifices peuvent être pourvus pour le passage de l'eau au travers de la grille de répartition au niveau de chaque moyen de perforation. On apporte ainsi une amélioration de la répartition d'eau dans le sachet ; ce qui permet d'améliorer le mouillage de la masse à extraire. Cependant, les orifices sont susceptibles de s'entartrer à la longue avec des conséquences sur le contrôle du débit et de la pression au cours de l'extraction.

La présente invention vise une amélioration dans la conception des éléments réalisant le perçage d'un élément de recharge fermé du type capsule, sachet ou autres qui favorise les conditions d'écoulement de l'eau à l'intérieur de l'élément de recharge et améliore les conditions d'extractions. Plus précisément, l'invention vise à améliorer l'arrosage en eau au travers de la substance à extraire en évitant les chemins privilégiés et en assurant une montée en pression relativement lente à l'intérieur de l'élément de recharge pour optimiser la capture des arômes. L'invention a aussi pour objet de supprimer le risque de réduction de l'écoulement en raison d'obstructions formés par des dépôts calcaires ou autres. L'invention a aussi pour objet de proposer une configuration de perçage garantissant un écoulement d'eau relativement reproductible d'un élément de recharge à l'autre qui tient compte des variations dues aux tolérances dimensionnelles entre le logement du dispositif et les éléments de recharge. L'invention vise aussi à limiter la remontée de résidus liquides ou solides en dehors de l'élément de recharge après extraction. L'invention a aussi pour objet de garantir une ouverture par les éléments de perçage plus propre et sans risque de détachement de matériau de la paroi de l'élément de recharge.

Pour cela, le dispositif selon l'invention comprend un corps creux destiné à recevoir l'élément de recharge, un canal d'arrivée d'eau traversant ledit corps et communiquant dans le logement et une pluralité d'éléments de perçage disposés dans le logement pour percer l'élément de recharge en plusieurs endroits distincts afin de permettre le passage de l'eau dans l'élément de recharge. L'amélioration du dispositif prévoit que les éléments de perçage sont espacés dans le logement par rapport à la direction d'arrivée d'eau. De plus, chaque élément de perçage comprend une portion de base qui est solidaire du corps et fait saillie dans le logement. La portion de base est destinée à s'engager au moins partiellement à l'intérieur de l'élément de recharge de façon à former une surface d'écoulement pour l'eau. La portion de base est intersectée par une surface de découpe selon un angle aigu formant une portion de découpe en biseau.

Une telle configuration des éléments de perçage a pour effet d'améliorer le mouillage de la substance à extraire en réduisant les chemins privilégiés, permet une montée en pression plus lente à l'intérieur de l'élément de recharge et donc améliore la qualité de l'extrait en substance liquide obtenu. De manière plus spécifique, les découpes sont ainsi réalisées avec une meilleure définition et une meilleure géométrie des ouvertures. Notamment, on obtient des ouvertures qui sont plus resserrées autour des éléments de perçage. Ceci a pour conséquence que l'eau s'écoule au début plus lentement dans l'élément de recharge en évitant de former des chemins privilégiés et aussi, la montée en pression qui s'en suit, se fait de manière plus lente. A la différence d'une simple pointe, l'élément de perçage selon l'invention ne crée pas un repliement de matière sur tout le pourtour de l'ouverture ; ce qui a tendance à l'agrandir, mais au contraire, l'élément de perçage découpe proprement et dégage la matière découpée du côté de la surface de découpe seulement, produisant ainsi une meilleure définition de l'ouverture et donc un effet bénéfique sur la vitesse de montée en pression interne.

De préférence, afin d'obtenir des ouvertures ayant une bonne définition, la surface de découpe de l'élément de perçage forme un angle de découpe compris entre 10 et 50 degrés, et de manière encore plus préférentielle 15 et 45 degrés, par rapport à la direction longitudinale de la portion de base.

De préférence, la portion de base présente une section qui décroît progressivement en direction de la surface de découpe selon un angle inférieur à l'angle de la surface de découpe ce qui permet de contrôler plus précisément l'agrandissement de l'ouverture et assurer ainsi que la matière reste au plus près de la portion de base au fur et à mesure de l'introduction de l'élément de perçage dans l'élément de recharge ; garantissant ensuite une montée en pression plus lente et donc une extraction de meilleure qualité.

La forme de la portion de base n'est pas limitative. Toutefois, on préférera que la portion de base ait une section transversale telle que le rapport de sa plus grande dimension à sa plus étroite dimension soit comprise entre 2/1 et 1/1 de façon à produire des d'ouvertures localisées en forme de trous plutôt que des entailles. Ainsi, la portion de base peut avoir une section de forme circulaire, ellipsoïdale, rectangulaire, carrée, triangulaire ou autre forme de polygones réguliers ou irréguliers.

De manière préférée, la portion de base forme une portion de cône d'angle compris entre 1 et 10 degrés, préférentiellement 3 et 5 degrés laquelle est intersectée par la surface de découpe. Ainsi, l'ouverture est agrandie de manière progressive et contrôlée autour de l'élément de perçage et le risque de déchirure est diminué.

On a aussi pu remarquer que l'orientation de l'élément de perçage, et notamment sa surface de découpe, dans le logement a une importance sur la propreté de la découpe. Ainsi, les éléments de perçage sont préférablement orientés dans le logement de façon à présenter leur surface de découpe respective selon un angle proche ou égal à 90 degrés par rapport à la surface de l'élément de recharge à découper lorsque celui-ci est engagé dans le logement. Autrement dit, l'angle d'attaque est orienté de manière à être maximal et favorise ainsi une découpe plus performante.

Bien entendu, la nature et la géométrie de l'élément de recharge peuvent recouvrir de nombreuses variantes. En général, le corps du dispositif possède un logement de forme et dimensions adaptées à recevoir un ou plusieurs types d'éléments de recharge. L'élément de recharge peut être un élément rigide, semi-rigide ou souple comprenant une substance à extraire sous forme compactée ou non. A titre d'exemple, le type d'élément de recharge est une capsule ou cartouche imperméable, scellée, comprenant une coupelle sensiblement en forme de tronc de cône et une face inférieure formant un opercule scellé sur le rebord inférieur de la coupelle comme celle faisant l'objet du brevet EP 512 468 dont le contenu est incorporé ici par référence. Selon une autre variante possible, il peut s'agir d'un sachet souple formé de deux feuilles souples soudées entre elles sur leur pourtour et comprenant une portion compactée de substance à extraire. Une telle configuration de sachet est décrite dans les brevets US 6025000 et US6068871 incorporés ici par référence.

Le corps du dispositif pour la réception de l'élément recharge selon l'invention peut faire partie d'un ensemble complet du type machine à café expresso ou similaire. Le corps peut être partie intégrante du dispositif ou être une partie rapportée par vis ou autres moyens. Le corps est en général communément appelé "cage à capsule". En général, le corps du dispositif coopère en fermeture avec une partie inférieure de fermeture complémentaire comprenant des moyens de rupture de la partie inférieure de l'élément de recharge pour l'écoulement de l'extrait produit lors de l'opération d'extraction. Selon l'invention, le corps et la partie inférieure de fermeture coopèrent en fermeture selon un principe de mâchoires mobiles dans une direction sensiblement correspondante à la direction des éléments de perçage dans le logement de façon à éviter tout risque de déchirement de l'élément de recharge. Un dispositif à mâchoire mobile de ce type est décrit dans la demande de brevet EP 0604 615 ou encore dans la demande de brevet non encore publiée EP No. 99117107.5 du 31.08.1999 au nom de la demanderesse; le contenu intégral des deux demandes étant aussi inclus ici par référence.

La suite de la description est faite en référence aux dessins dans lesquels :
La figure 1 montre une vue éclatée d'un dispositif d'extraction selon un mode préféré ;
La figure 2 montre une vue en coupe plus particulièrement du dispositif de perçage et d'alimentation en eau selon l'invention ;
La figure 3 montre en coupe une disposition préférée d'éléments de perçage solidaires d'un support de montage ;
La figure 4 est une vue de la figure 3 en perspective ;
La figure 5 montre le principe de découpe par une élément de perçage de l'invention.

Dans la présente demande le terme "capsule" peut être employé pour désigner l'élément de recharge. Il ne doit pas toutefois être interprété de manière limitative et peut inclure tout type d'élément de recharge rigide, semi-rigide ou souple.

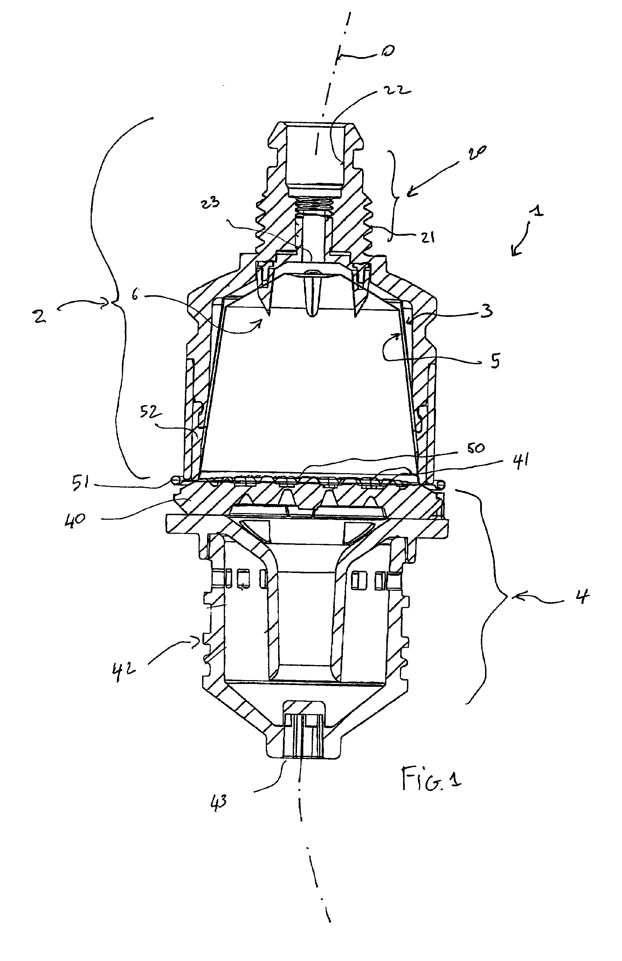

En référence avec la figure 1, le dispositif d'extraction 1 selon l'invention se présente sous la forme d'un ensemble d'extraction capable de recevoir un élément de recharge 5, en l'occurrence dans l'exemple illustré, une capsule semi-rigide contenant une substance à extraire telle qu'une quantité prédosée de café moulu et torréfié. L'ensemble d'extraction comprend plus précisément une cage à capsule formant un corps creux 2 muni d'un logement 3 et un support inférieur 4 capable de coopérer avec la cage à capsule 2 en fermeture autour de l'élément de recharge 5. La fermeture de la cage à capsule 2 et du support inférieur 4 peut être réalisé par tout moyen mécanique approprié, mais de préférence, par mobilité relative selon une direction sensiblement verticale, rectiligne ou faiblement arquée, de trajectoire O. A titre d'exemple, le support inférieur 4 peut-être statique dans la direction O pour recevoir l'élément de recharge 5 et la cage à capsule peut être mobile dans la direction O en position de fermeture. Alternativement, on peut aussi prévoir le support inférieur mobile selon O et la cage à capsule fixe ou encore mobile selon O.

La cage à capsule 2 se prolonge vers le haut par une portion supérieure 20 présentant des moyens de connexion 21 tels qu'un filetage externe permettant le raccordement à une alimentation en eau chaude. La portion supérieure 20 comprend un alésage interne 22 pour le passage de l'eau qui communique dans le logement 3 du corps creux au niveau d'une sortie d'eau 23.

Le support inférieur 4 comprend une plaque de répartition 40 pour recevoir la base de la capsule généralement constituée d'une feuille souple 50. La plaque de répartition comprend de manière répartie sur sa surface interne des éléments en reliefs 41 destinés à provoquer l'ouverture par déchirement multiple de la feuille souple sous l'effet de la pression d'extraction à l'intérieur de la capsule. En aval de la plaque de répartition est prévu un sous-ensemble 42 pour l'écoulement de l'extrait liquide obtenu, après rupture de la base de la capsule, se terminant par un orifice de sortie 43.

L'élément de recharge possède un bord périphérique scellé 51 maintenu en pincement entre la cage à capsule 2 et le support inférieur 4. La fermeture par pincement est réalisée de manière étanche par un contact entre des bords de de la cage et du support . Des moyens d'étanchéité, tels qu'une bague élastomère 52 de la cage, peuvent être prévus pour assurer un pincement ferme et élastique entre les parties en contact et éviter ainsi tout risque de fuite lors de la mise en pression dans le logement. Les moyens mécaniques assurant la fermeture et le maintien en position fermée de l'ensemble ne sont pas illustrés ici. Il peut s'agir, par exemple, de moyens du type à genouillère à commande manuelle ou motorisée.

Comme le montre plus précisément la figure 2, une série d'éléments de perçage 6 est prévue au fond du logement 3 pour découper le dessus de la capsule selon une pluralité de trous et permettre le passage de l'eau dans la capsule. Les éléments de perçage 6 sont régulièrement répartis autour de l'arrivée d'eau centrale et font saillie vers l'intérieur du logement dans une direction sensiblement parallèle à la direction d'engagement de la capsule dans le logement. De préférence, les éléments sont montés de manière solidaire sur un support de montage commun 60 permettant un montage rapide à l'intérieur du logement. Le support de montage peut comprendre une portion creuse de tige 62 comportant un filetage externe 63 qui se visse dans une portion filetée complémentaire du canal d'arrivée d'eau. Les éléments de perçage peuvent être montés par des vis 64 sur le support 60. Dans une alternative, les éléments de perçage pourraient être soudés sur le support ou faire partie intégrante du support.

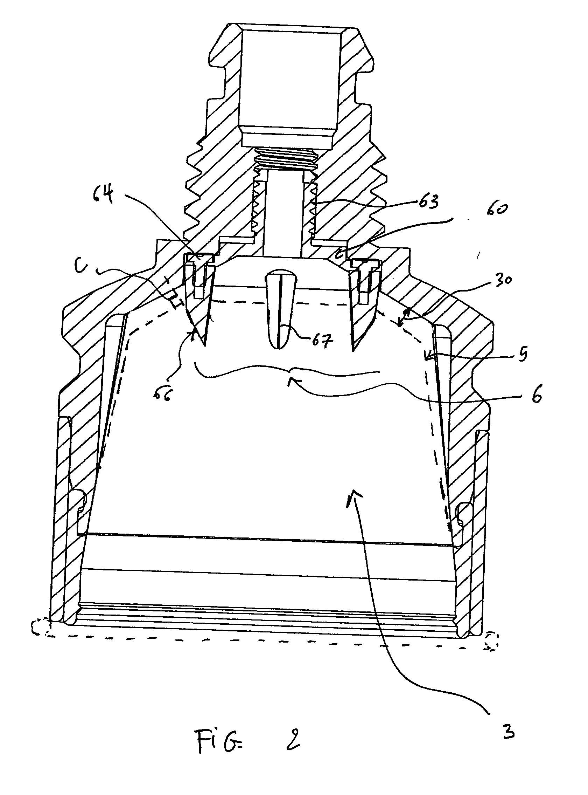

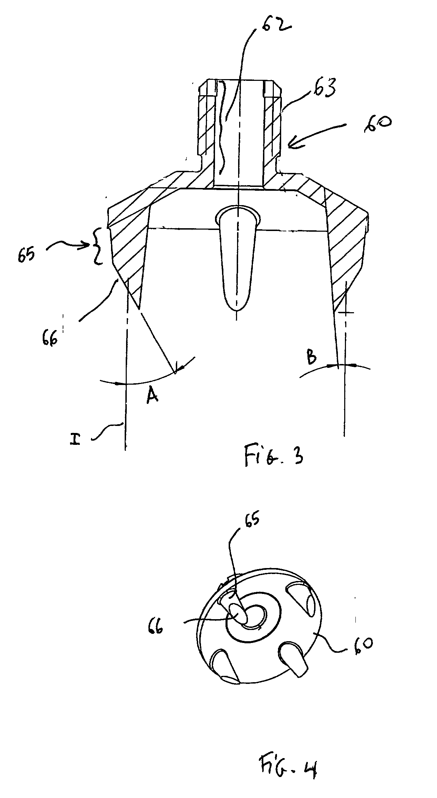

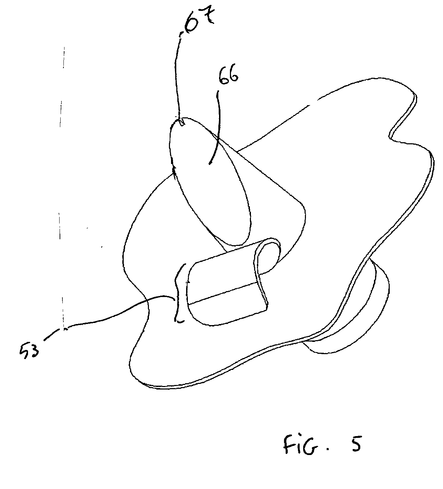

Comme le montre la figure 3, chaque élément de perçage 6 comprend une portion de base 65 orientée selon une direction longitudinale I correspondant à la direction d'engagement dans l'élément de recharge. La portion de base est interrompue par une surface inclinée 66 qui forme la surface de découpe de l'élément. L'angle d'inclinaison A de la surface de découpe par rapport à la direction I est de préférence compris entre 10 et 50 degrés, mieux encore entre 15 et 45 degrés. La surface 66 a essentiellement une fonction de découpe telle que l'illustre la figure 5 avec pour effet avantageux que le copeau de matière 53 est découpé de manière nette et est dégagé d'un seul tenant du côté de la partie biseautée 66. Ainsi, on évite un déchirement comme avec une pointe où la matière a tendance à s'écarter selon plusieurs directions créant des lignes de déchirure sur le pourtour du trou.

La portion de base peut avantageusement être une portion de cône de section effilée en direction de la surface de découpe. Une telle forme est avantageuse car elle permet de garantir le maintien d'un jeu minimum entre la surface de la portion de base et le bord du trou. On évite ainsi une rentrée d'eau trop brutale ce qui aurait pour conséquence de créer des chemins privilégiés au travers de la masse à extraire et donc, par conséquent engendrer une montée en pression trop rapide. Une telle forme en tronc de cône est aussi avantageuse par rapport à une forme à section constante en particulier lorsque la fermeture du dispositif se fait selon une trajectoire sensiblement arquée comme représentée à la figure 1 dans la mesure où une section constante aurait pour effet d'élargir le trou du côté externe à la courbe et donc de créer un jeu indésirable.

Dans l'exemple illustré, l'élément de recharge s'expanse relativement peu lors de la mise en pression de sorte qu'un passage 30 est maintenu entre la paroi du logement et la paroi de l'élément de recharge 5. Ainsi, la portion de base 65 doit avoir une longueur suffisante, de l'ordre de 2 à 15 mm, de sorte que lorsque l'élément de recharge est engagé en position dans le logement, la surface de découpe 66 est entièrement positionnée à l'intérieur de l'enceinte de l'élément de recharge ; et ce, en tenant compte des variations possibles de l'épaisseur du passage, dues aux tolérance dimensionnelles entre le logement et l'élément de recharge.

Comme le montre la figure 2, chaque élément de perçage est orienté individuellement dans le logement de sorte que sa surface de découpe 66 fasse un angle de 90 +/- 5 degrés par rapport à la surface à découper. On obtient ainsi une meilleure découpe et une moindre usure de la surface de découpe.

Les éléments de perçage peuvent être réalisés en matériau approprié dur et résistant à l'usure. Le matériau est choisi en fonction du matériau de la capsule ou sachet à découper. En général, les capsules sont en aluminium mince ou en plastique de 0,2 à 1,5 dixième de millimètre de sorte que les éléments de perçage peuvent être en métal, de préférence, en aluminium anodisé couche dure ou acier inoxydable, ou encore en céramique ou en plastique dur.

Le nombre d'éléments de perçage peut bien entendu varier en fonction de la taille de l'éléments de recharge. Un nombre suffisant est nécessaire pour correctement repartir l'eau au travers de la masse sans toutefois trop fragiliser la paroi de l'élément qui pourrait alors rompre et ainsi souiller le logement. Ainsi, le nombre des éléments de perçage est de préférence compris entre 3 et 10, de préférence 4 et 6.

Dans une configuration possible, chaque élément de perçage peut être muni d'une rainure 67 longitudinalement distribuée le long de la surface de la portion de base ; permettant d'affiner l'écoulement d'eau d'une manière contrôlée. La rainure est préférablement disposée du côté de l'extrémité de la surface de découpe de sorte qu'elle soit suffisamment dégagée.

Dans l'exemple présenté, la méthode pour extraire un liquide est la suivante. Le dispositif se trouve en position ouverte et une capsule 5 est déposée sur la surface en relief du support inférieur 4. Le dispositif est refermé par application des bords de la cage 2 et du support 4 en pinçant le bord de scellage 51 de la capsule. Lors de la fermeture, la surface supérieure de la capsule est découpée par les éléments de perçage 6. Dans cette position, une partie significative de la portion de base de chaque élément est introduite dans la capsule de façon à offrir une surface d'écoulement pendant le temps d'extraction. L'eau chaude arrive dans le logement par la sortie 23 et se réparti dans le passage 30 puis s'écoule lentement entre la surface des éléments de perçage et les bords découpés des ouvertures. Au fur et à mesure que l'eau pénètre, la pression à l'intérieur de la capsule augmente lentement ; ce qui a tendance à légèrement dilater les trous de manière homogène autour de chaque élément. La pression à la déchirure de la base de la capsule atteint environ 7 à 9 bars en quelques secondes. La tension de rupture de la feuille de la capsule est alors atteinte et le liquide extrait peut s'évacuer au travers de la partie d'écoulement 42 et par le trou 43.

L'invention a été décrite à titre d'exemple préférentiel en rapport avec un dispositif pour l'extraction de capsules semi-rigide ayant une déformabilité limitée. Cependant, il est entendu, que l'invention s'applique tout autant pour l'extraction d'éléments de recharge souples du type sachets comprenant une masse compactée d'une subtance alimentaire extractable.

## Revendications

1. Dispositif pour l'extraction d'une substance alimentaire contenue dans un élément de recharge fermé, ledit dispositif comprenant un corps creux muni d'un logement pour recevoir l'élément de recharge, un canal d'arrivée d'eau traversant ledit corps et communiquant dans le logement, une pluralité d'éléments de perçage disposés dans le logement pour percer l'élément de recharge en plusieurs endroits distincts afin de permettre le passage de l'eau dans l'élément de recharge, **caractérisé en ce que**
les éléments de perçage sont espacés dans le logement par rapport à la direction d'arrivée d'eau dans le logement et **en ce que**,
chaque élément de perçage comprend :
(i) une portion de base solidaire du corps faisant saillie dans le logement ; ladite portion de base étant destinée à s'engager au moins partiellement à l'intérieur de l'élément de recharge et,
(ii) une surface de découpe qui intersecte la portion de base selon un angle aigu.

2. Dispositif selon la revendication 1, **caractérisé en ce que** la portion de base présente une section qui décroît progressivement en direction de la surface de découpe selon un angle inférieur à l'angle de la surface de découpe.

3. Dispositif selon la revendication 1 ou 2, **caractérisé en ce que** la surface de découpe forme un angle de découpe compris entre 10 et 50 degrés, préférentiellement 15 et 45 degrés, par rapport à la direction longitudinale de la portion d'engagement.

4. Dispositif selon la revendication 1, 2 ou 3, **caractérisé en ce que** la portion base forme une portion de section circulaire, ellipsoïdale, ou de polygones réguliers ou irréguliers.

5. Dispositif selon la revendication 4, **caractérisé en ce que** la portion de base forme une portion de cône d'angle compris entre 0 et 10 degrés, préférentiellement 3 et 5 degrés.

6. Dispositif selon l'une quelconque des revendications précédentes, **caractérisé en ce que** les éléments sont orientés dans le logement de façon à présenter la surface de découpe selon un angle proche ou égal à 90 degrés par rapport à la surface de l'élément de recharge à découper lorsque celui-ci est engagé dans le logement.

7. Dispositif selon l'une quelconque des revendications précédentes, **caractérisé en ce que** la portion de base comprend sur sa surface externe au moins une rainure ouverte longitudinalement orientée pour faciliter l'introduction d'eau dans l'élément de recharge.

8. Dispositif selon l'une quelconque des revendications précédentes, **caractérisé en ce que** le canal d'arrivée d'eau est localisé de manière centrale dans le logement et **en ce que** les éléments de perçage sont répartis régulièrement de manière excentrée autour du canal.

9. Dispositif selon revendication 7 ou 8, **caractérisé en ce que** le nombre d'éléments de perçage est compris entre 3 et 10, de préférence 4 et 6.
